# FASCICULE DE BREVET EUROPEEN

(11) **EP 1 627 174 B1**
(45) Date de publication et mention de la délivrance du brevet: **02.11.2006**
(21) Numéro de dépôt: 04742698.6
(22) Date de dépôt: 11.05.2004
(51) Int. Cl.: F16L 37/092

(54) **DISPOSITIF DE RACCORDEMENT INSTANTANE**
SCHNELLVERBINDUNGSVORRICHTUNG
INSTANTANEOUS CONNECTION DEVICE

(30) Priorité: 28.05.2003 FR 0306487
(43) Date de publication de la demande: 22.02.2006
(73) Titulaire: LEGRIS SA, 35000 Rennes (FR)
(72) Inventeur: LE QUERE, Philippe, F-35830 Betton (FR); LE BARS, Nicolas, F-35235 Thorigne (FR)
(74) Mandataire: Lavialle, Bruno François Stéphane
(86) Numéro de dépôt international: PCT/FR2004/001142
(87) Numéro de publication internationale: WO 2004/109176

(56) Documents cités:
- AT-B- 357 832
- GB-A- 2 150 243
- GB-A- 2 292 780

## Description

La présente invention concerne un dispositif de raccordement instantané utilisable pour relier une extrémité de conduite à un élément d'un circuit de transport de fluide. Cet élément peut être une autre conduite, un élément émetteur de fluide tel qu'une pompe ou un élément récepteur de fluide tel qu'un réservoir.

### ARRIERE PLAN DE L'INVENTION

Un dispositif de raccordement instantané comprend généralement un corps tubulaire et des moyens de retenue étanches d'une extrémité de conduite dans le corps. Ces moyens comprennent un élément d'étanchéité annulaire élastiquement déformable et un organe de retenue qui sont agencés pour recevoir l'extrémité de conduite. Des moyens de came sont interposés entre le corps et l'organe de retenue pour amener l'organe de retenue d'un état de libération à un état d'agrippement de l'extrémité de conduite lorsque l'organe de retenue est déplacé axialement dans le corps tubulaire d'une première position à une deuxième position. Des moyens de rappel élastique de l'organe de retenue dans sa deuxième position sont prévus, qui, en ramenant l'organe de retenue dans sa deuxième position, tendent à maintenir celui-ci dans l'état d'agrippement de l'extrémité de conduite.

Ainsi, lorsqu'une extrémité de conduite est introduite dans le corps du dispositif de raccordement, elle rencontre l'organe de retenue dans sa deuxième position et le repousse dans sa première position, l'amenant ainsi dans son état de libération qui permet le passage de l'extrémité de conduite dans l'organe de retenue pour venir en contact de l'élément d'étanchéité. Sous l'effet des moyens de rappel élastique, l'organe de retenue tend à revenir dans sa deuxième position et dans son état d'agrippement. Les moyens de rappel élastique limitent ainsi le recul de l'extrémité de conduite à la mise sous pression du circuit de transport de fluide dans lequel le dispositif de raccordement est implanté. Les moyens de rappel élastique permettent également de rattraper une partie du jeu de fonctionnement de l'organe de retenue.

Les moyens de rappel élastique sont généralement constitués d'un ressort hélicoidal monté entre un épaulement du corps et un épaulement de l'organe de retenue. La présence du ressort complique la conception du dispositif de raccordement et nécessite une opération de montage supplémentaire. Le document GB-A-2292780 décrit en raccord instanté ayant les caractéristiques du préambule de la revendication 1.

### OBJET DE L'INVENTION

La présente invention a pour objet un dispositif de raccordement instantané possédant une structure qui soit simple tout en incorporant des moyens de rappel élastique de l'organe de retenue.

### BREVE DESCRIPTION DE L'INVENTION

A cet effet, on prévoit, selon l'invention, un dispositif de raccordement instantané comprenant un corps tubulaire et des moyens de retenue étanche d'une extrémité de conduite dans le corps, ces moyens comprenant un élément d'étanchéité annulaire élastiquement déformable et un organe de retenue qui sont agencés pour recevoir l'extrémité de conduite, des moyens de came pour amener l'organe de retenue d'un état de libération à un état d'agrippement de l'extrémité de conduite lorsque l'organe de retenue est déplacé axialement dans le corps tubulaire d'une première position à une deuxième position, et des moyens de rappel élastique de l'organe de retenue vers sa deuxième position, l'élément d'étanchéité étant monté entre un épaulement radial du corps et une face radiale de l'organe de retenue pour former le moyen de rappel élastique de l'organe de retenue vers sa deuxième position et l'épaulement radial du corps et la face radiale de l'organe de retenue présentent des reliefs réciproques pour prendre appui latéralement sur l'élément annulaire d'étanchéité.

Ainsi, l'élément annulaire d'étanchéité exerce, ou-tre sa fonction d'étanchéité, une fonction supplémentaire de rappel élastique de l'organe de retenue. Cet agencement, permettant à l'élément d'étanchéité d'exercer cette double fonction, simplifie la structure du dispositif de raccordement.

L'agencement de reliefs réciproques sur l'épaulement radial du corps et la face radiale de l'organe de retenue permet d'utiliser l'étirement du joint pour définir la course de l'organe de retenue. La course alors obtenue est supérieure à celle qui résulterait uniquement de l'écrasement du joint.

Avantageusement, l'épaulement du corps comprend une surface tronconique convexe.

Ainsi, le joint peut être poussé sur la surface tronconique convexe qui tend à provoquer l'expansion de l'élément annulaire de l'étanchéité. Ceci permet d'avoir une mobilité du joint permettant l'obtention d'une course relativement importante de l'organe de retenue, l'élément annulaire d'étanchéité tendant à revenir dans sa position initiale du fait de son élasticité pour rappeler l'organe de retenue dans sa deuxième position.

D'autres caractéristiques ressortiront à la lecture de la description qui suit d'un mode de réalisation particulier non limitatif de l'invention.

### BREVE DESCRIPTION DES DESSINS

Il sera fait référence aux dessins annexés, parmi lesquels :
- la figure 1 est une vue en perspective d'un dispositif de raccordement conforme à l'invention,
- la figure 2 est une vue partielle en perspective avec écorché de ce dispositif de raccordement,

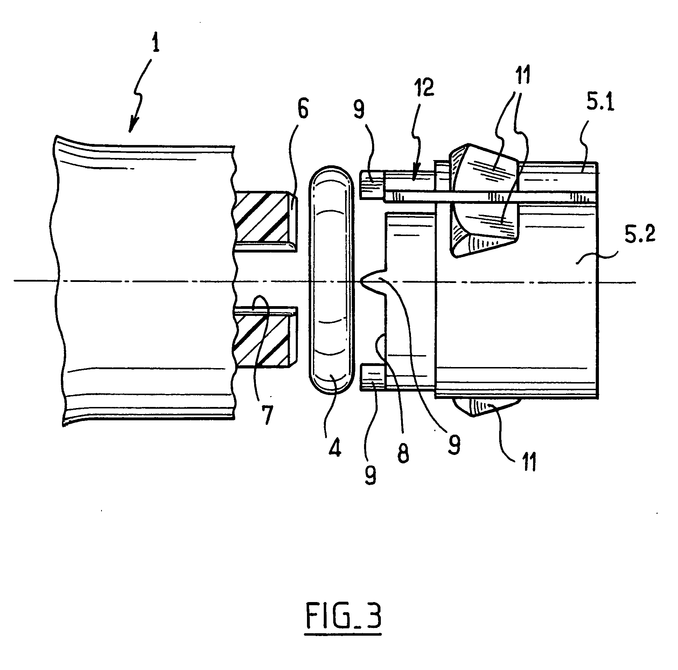

- la figure 3 est une vue partielle en élévation et en éclaté de ce dispositif de raccordement.

### DESCRIPTION DETAILLEE DE L'INVENTION

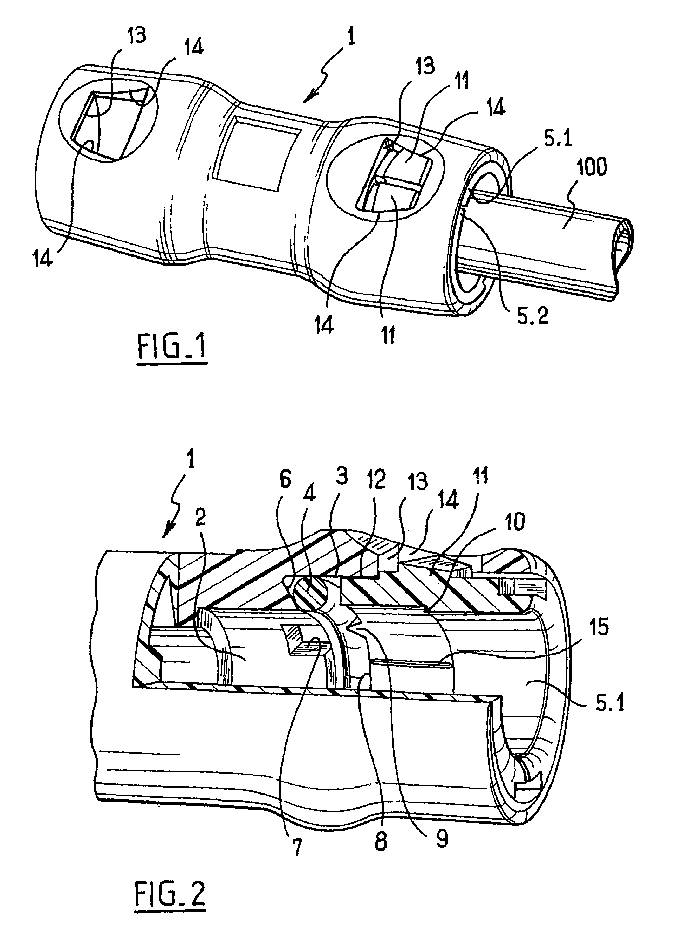

Le dispositif de raccordement conforme à l'invention est ici un raccord permettant la connexion de deux extrémités de conduite 100 l'une à l'autre (une seule est visible à la figure 1). L'invention est également applicable au raccordement d'une extrémité de conduite à un élément d'un circuit de transport de fluide, cet élément étant émetteur de fluide comme une pompe ou récepteur de fluide comme un réservoir.

Le raccord comprend un corps, généralement désigné en 1, de forme tubulaire délimitant un canal étagé comportant un tronçon central 2 et des tronçons d'extrémité 3 recevant chacun des moyens de retenue étanche d'une extrémité de conduite 100 dans le corps 1. Le corps est ici symétrique et les moyens de retenue étanche logés dans chacune des extrémités du corps 1 sont ici identiques. Dans le cas du raccordement d'une extrémité de conduite à un élément d'un circuit de transport de fluide, le raccord peut avoir une extrémité en une seule pièce avec l'élément de circuit ou montée sur l'élément de circuit de manière connue par encliquetage, emmanchement à force ou tout autre moyen de fixation amovible ou définitive.

Les moyens de retenue étanche comprennent un élément d'étanchéité 4 et un organe de retenue 5 qui sont agencés pour recevoir l'extrémité de conduite.

L'élément d'étanchéité 4 est ici un joint torique en élastomère ayant un diamètre interne légèrement inférieur à un diamètre externe de l'extrémité de conduite 100. L'élément d'étanchéité 4 est adjacent à un épaulement 6 s'étendant entre le tronçon d'extrémité 3 et le tronçon central 2. L'épaulement 6 est délimité par une surface tronconique convexe dans laquelle sont ménagés axialement des renfoncements 7.

L'organe de retenue 5 comprend ici deux mors 5.1, 5.2 en forme de demi-tube. Chaque mors 5.1, 5.2 a une face terminale radiale 8 en saillie axiale de laquelle s'étendent des redans 9 en regard des renfoncements 7. Les mors 5.1 et 5.2 sont montés dans le tronçon d'extrémité 3 pour coulisser parallèlement à la direction d'introduction de l'extrémité de conduite 100 entre une première position et une deuxième position successives dans le sens inverse du sens d'introduction de l'extrémité de conduite 100. Lorsque l'organe de retenue 5 est dans la première position, l'élément d'étanchéité 4 est écrasé et étiré entre l'épaulement 6 et les redans 9, les redans 9 et les renfoncements 7 définissant des chicanes dans lesquelles s'étend l'élément d'étanchéité 4. Les redans 9 et les renfoncements 7 sont ici disposés symétriquement. Leurs nombres peuvent être modifiés. L'élément d'étanchéité 4 est également expansé radialement du fait de la pente de la surface tronconique convexe formant l'épaulement 6. Lorsque l'organe de retenue 5 est dans la deuxième position (figure 2), l'élément d'étanchéité 4 est dans un état de moindre déformation de telle manière qu'il tend à rappeler élastiquement l'organe de retenue 5 dans cette position.

Chaque mors 5.1, 5.2 a une surface interne pourvue de dents 10.

Deux ergots 11 s'étendent transversalement en saillie de la surface externe 12 de chaque mors 5.1, 5.2 au voisinage des bords longitudinaux des mors 5.1, 5.2. Les ergots 11 adjacents de chaque mors 5.1, 5.2 sont reçus dans des empreintes 13 ménagées transversalement dans la paroi du corps 1 pour déboucher de part et d'autre de cette paroi. Les empreintes 13 s'étendent longitudinalement par rapport au corps 1 et présentent deux faces latérales 14 qui divergent l'une de l'autre dans le sens d'introduction de l'extrémité de conduite 100 dans le corps 1. Les faces latérales 14 coopèrent par glissement avec les ergots 11 à la manière de cames pour amener l'organe de retenue 5 d'un état de libération à un état d'agrippement de l'extrémité de conduite 100 lorsque l'organe de retenue 5 est déplacé dans le corps 1 de sa première position vers sa deuxième position. Dans l'état de libération les mors délimitent un diamètre de passage pour l'extrémité de conduite 100 sensiblement égal au diamètre externe de cette dernière. Dans l'état d'agrippement, les dents 10 mordent dans la surface externe de l'extrémité de conduite 100.

Le corps 1 comprend des moyens d'indexation angulaire de l'organe de retenue 5 par rapport au corps 1. Ces moyens comprennent par exemple un redan interne reçu entre les deux mors 5.1, 5.2. De préférence alors, les deux mors 5.1, 5.2 comprennent également des moyens de blocage en rotation de l'extrémité de conduite 100 par rapport aux mors. Ces moyens comprennent ici des dents allongées 15 s'étendant axialement et en saillie interne dans l'organe de retenue 5.

Lorsque l'extrémité de conduite 100 est introduite dans le corps 1, l'extrémité de conduite 100 vient en butée contre l'organe de retenue 5 alors dans son état d'agrippement et le repousse de sa deuxième position vers sa première position à l'encontre de l'effort exercé sur l'organe de retenue par l'élément d'étanchéité 4. Quand l'organe de retenue 5 arrive dans sa première position, l'élément d'étanchéité 4 est repoussé par l'organe de retenue 5 sur l'épaulement 6 où il est expansé radialement et étiré par les chicanes formées par les renfoncements 7 et les redans 9. L'organe de retenue 5 est lui amené dans son état de libération sous l'effort de pénétration axiale exercé par la conduite. L'organe de retenue permet alors le passage de l'extrémité de conduite 100 qui est introduite à force dans l'élément d'étanchéité 4 jusqu'à venir en butée d'un épaulement situé dans le tronçon central 2. L'introduction de la conduite dans l'élément d'étanchéité est facilitée par l'expansion radiale de l'élément d'étanchéité sur la partie tronconique de l'épaulement 6 et par son étirement dans les chicanes, ces déformations provoquant également une diminution de la section transversale de l'élément d'étanchéité 4. Ceci limite la nécessité d'un recours au graissage de l'élément d'étanchéité pour faciliter l'introduction de la conduite, opération dont la répétabilité est aléatoire.

L'élément d'étanchéité 4 tend à revenir dans son état de moindre déformation de sorte qu'il glisse sur la surface tronconique de l'épaulement 6 et se détend en repoussant l'organe de retenue 5 vers sa deuxième position.

Pendant le mouvement de l'organe de retenue 5 de sa première position vers sa deuxième position, les ergots 11 et les surfaces latérales 14 de l'empreinte 13 coopèrent pour amener l'élément de conduite 5 de son état de libération vers son état d'agrippement.

L'élément d'étanchéité 4 amorce ainsi le serrage de l'organe de retenue 5 sur l'extrémité de conduite de sorte que, lorsqu'un effort de traction est exercé sur la conduite ou que le circuit est mis sous pression, la conduite recule et entraîne l'organe de retenue dans sa deuxième position. L'élément d'étanchéité 4 permet de la sorte de compenser une partie du jeu de fonctionnement de l'organe de retenue 5 et de limiter le recul de l'extrémité de conduite 100 lors de la mise sous pression du circuit de transport de fluides auquel ils appartiennent.

Bien entendu, l'invention n'est pas limitée au mode de réalisation décrit et on peut y apporter des variantes de réalisation sans sortir du cadre de l'invention tel que défini par les revendications.

Bien que l'invention ait été décrite en relation avec un organe de retenue formé de mors, l'invention est applicable à tout type d'organe de retenue mobile axialement dans le corps du dispositif de raccordement et par exemple avec un organe de retenue formé d'un tube dans une extrémité duquel des rainures axiales sont ménagées pour délimiter des griffes déformables.

En outre, l'élément d'étanchéité peut avoir d'autres formes telles qu'une section carrée ou être formé d'un joint à lobes ou autre.

L'épaulement 6 peut avoir d'autres formes et par exemple être constitué d'une surface radiale pourvue ou non de redans ou de renfoncement.

Les reliefs réciproques peuvent avoir toute forme susceptible de former une chicane permettant d'étirer l'élément d'étanchéité.

De préférence, les reliefs réciproques comprennent au moins deux redans 9 en saillie de la face radiale 8 de l'organe de retenue 1 et au moins deux renfoncements 7 de l'épaulement radial 6 du corps 1 qui sont en regard des redans.

## Revendications

1. Dispositif de raccordement instantané comprenant un corps (1) tubulaire et des moyens de retenue étanche d'une extrémité de conduite dans le corps, ces moyens comprenant un élément d'étanchéité (4) annulaire élastiquement déformable et un organe de retenue (5) qui sont agencés pour recevoir l'extrémité de conduite, des moyens de came (11, 14) pour amener l'organe de retenue d'un état de libération à un état d'agrippement de l'extrémité de conduite lorsque l'organe de retenue est déplacé axialement dans le corps tubulaire d'une première position à une deuxième position, et des moyens de rappel élastique de l'organe de retenue vers sa deuxième position, l'élément d'étanchéité est monté entre un épaulement radial (6) du corps et une face radiale (8) de l'organe de retenue pour former le moyen de rappel élastique de l'organe de retenue vers sa deuxième position, **caractérisé en ce que** l'épaulement radial (6) du corps (1) et la face radiale (8) de l'organe de retenue (5) présentent des reliefs réciproques (7, 9) pour prendre appui latéralement sur l'élément annulaire d'étanchéité (4).

2. Dispositif selon la revendication 1, **caractérisé en ce que** les reliefs réciproques comprennent au moins deux redans (9) en saillie de la face radiale (8) de l'organe de retenue (1) et au moins deux renfoncements (7) de l'épaulement radial (6) du corps (1) qui sont en regard des redans.

3. Dispositif selon la revendication 1 ou la revendication 2, **caractérisé en ce qu'**il comprend des moyens d'indexation angulaire (11, 14) de l'organe de retenue (5) par rapport au corps (1).

4. Dispositif selon la revendication 3, **caractérisé en ce qu'**il comprend des moyens (15) de blocage en rotation de l'extrémité de conduite (100) par rapport à l'organe de retenue (5).

5. Dispositif selon la revendication 1, **caractérisé en ce que** l'épaulement (6) du corps (1) comprend une surface tronconique convexe.

## Claims

1. An instantaneous coupling device comprising a tubular body (1) and retaining means for retaining a pipe end in leaktight manner in the body, said means comprising an elastically deformable annular sealing element (4) and a retaining member (5) that are arranged to receive the pipe end, cam means (11, 14) for bringing the retaining member from a release state in which it releases the pipe end to a grip state in which it grips the pipe end when the retaining member is moved axially in the tubular body from a first position to a second position, and means for resiliently returning the retaining member towards its second position, the sealing element is mounted between a radial shoulder (6) of the body and a radial face (8) of the retaining member in order to form the resilient return means for returning the retaining member towards its second position, the device being **characterized in that** the radial shoulder (6) of the body (1) and the radial face (8) of the retaining member (5) present complementary portions in relief (7, 9) to bear laterally against the annular sealing element (4).

2. A device according to claim 1, **characterized in that** the complementary portions in relief comprise at least two tongues (9) projecting from the radial face (8) of the retaining member (5), and at least two setbacks (7) in the radial shoulder (6) of the body (1) facing the tongues.

3. A device according to claim 1 or claim 2, **characterized in that** it includes angular indexing means (11, 14) for indexing the angular position of the retaining member (5) relative to the body (1).

4. A device according to claim 3, **characterized in that** it includes means (15) for preventing the pipe end (100) from turning relative to the retaining member (5).

5. A device according to claim 1, **characterized in that** the shoulder (6) of the body (1) has a convex frustoconical surface.

## Patentansprüche

1. Schnellverbindungsvorrichtung, umfassend ein rohrförmiges Gehäuse (1) und Haltemittel, um ein Leitungsende auf dichte Weise in dem Gehäuse zu halten, wobei diese Mittel ein ringförmiges, elastisch verformbares Dichtungselement (4) und ein Halteelement (5) umfassen, die derart angeordnet sind, dass sie das Leitungsende aufnehmen, Nockenmittel (11, 14), um das Halteelement von einem das Leitungsende freigebenden Zustand in einen das Leitungsende festhaltenden Zustand zu bringen, wenn das Halteelement in dem rohrförmigen Gehäuse von einer ersten Position in eine zweite Position axial verschoben wird, sowie Mittel zum elastischen Rückstellen des Halteelements in seine zweite Position, wobei das Dichtungselement zwischen einer radialen Schulter (6) des Gehäuses und einer radialen Fläche (8) des Halteelements angebracht ist, um die Mittel zum elastischen Rückstellen des Halteelements in seine zweite Position zu bilden, **dadurch gekennzeichnet, dass** die radiale Schulter (6) des Gehäuses (1) und die radiale Fläche (8) des Halteelements (5) wechselseitige Reliefelemente (7, 9) aufweisen, die zur seitlichen Anlage an dem ringförmigen Dichtungselement (4) bestimmt sind.

2. Vorrichtung nach Anspruch 1, **dadurch gekennzeichnet, dass** die wechselseitigen Reliefelemente mindestens zwei Vorsprünge (9) der radialen Fläche (8) des Halteelements (1) und mindestens zwei Rücksprünge (7) der radialen Schulter (6) des Gehäuses (1) umfassen, die den Vorsprüngen gegenüberliegen.

3. Vorrichtung nach Anspruch 1 oder Anspruch 2, **dadurch gekennzeichnet, dass** sie Winkelindexierungsmittel (11, 14) zur Winkelindexierung des Halteelements (5) relativ zum Gehäuse (1) umfasst.

4. Vorrichtung nach Anspruch 3, **dadurch gekennzeichnet, dass** sie Mittel (15) zur Drehblockierung des Leitungsendes (100) relativ zum Halteelement (5) umfasst.

5. Vorrichtung nach Anspruch 1, **dadurch gekennzeichnet, dass** die Schulter (6) des Gehäuses (1) eine konvexe, kegelstumpfförmige Oberfläche umfasst.
